# NEUE EUROPÄISCHE PATENTSCHRIFT

(11) **EP 2 285 612 B2**
(45) Veröffentlichungstag und Bekanntmachung des Hinweises auf die Entscheidung über den Einspruch: **10.03.2021**
(45) Hinweis auf die Patenterteilung: 03.06.2015
(21) Anmeldenummer: 09749539.4
(22) Anmeldetag: 30.04.2009
(51) Int. Cl.: B60J 10/02

(54) **PROFILELEMENT ZUM VERBINDEN EINER FAHRZEUGSCHEIBE MIT EINEM WASSERKASTEN**
PROFILE ELEMENT FOR CONNECTING A VEHICLE PANE WITH A COWL
ELÉMENT DE PROFIL DESTINÉ À RELIER UNE PLAQUE DE VÉHICULE À UNE GRILLE D'AUVENT

(30) Priorität: 23.05.2008 DE 202008006986 U
(43) Veröffentlichungstag der Anmeldung: 23.02.2011
(73) Patentinhaber: Elkamet Kunststofftechnik GmbH, 35216 Biedenkopf (DE)
(72) Erfinder: PLATT, Wolfgang, 35216 Biedenkopf-Kombach (DE); ORTMÜLLER, Michael, 35216 Biedenkopf (DE); WELLER, Daniel, 35764 Sinn (DE)
(74) Vertreter: DREISS Patentanwälte PartG mbB
(86) Internationale Anmeldenummer: PCT/EP2009/003143
(87) Internationale Veröffentlichungsnummer: WO 2009/141049

(56) Entgegenhaltungen:
- EP-A- 0 249 560
- EP-A- 1 571 069
- EP-A- 1 724 141
- EP-A1- 0 003 968
- EP-A1- 0 644 350
- EP-A1- 0 836 961
- EP-A1- 1 808 322
- EP-B1- 1 240 041
- WO-A-2006/002891
- WO-A1-01/85481
- DE-A1- 1 480 058
- DE-A1- 2 801 640
- DE-A1- 10 122 637
- DE-A1- 10 322 637
- DE-A1-102004 030 465
- DE-T2- 60 202 318
- DE-T2-602004 006 432
- DE-U1- 8 617 588
- DE-U1- 20 008 555
- DE-U1-202005 019 203
- FR-A- 2 817 302
- FR-A1- 2 739 060
- JP-A- H08 240 213
- US-A- 5 396 746

## Beschreibung

Die Erfindung betrifft ein Profilelement zum Verbinden einer Fahrzeugscheibe mit einem Wasserkasten, gemäß Oberbegriff des Anspruchs 1.

Bei Fahrzeugen befindet sich unterhalb der Fahrzeugscheibe, beispielsweise der Windschutzscheibe, ein Wasserkasten, der von der Scheibe abfließendes Wasser auffängt und seitlich abführt. Zur Festlegung und Abdichtung des Wasserkastens an der Unterkante der Fahrzeugscheibe verwendet man beispielsweise einen extrudierten Profilkörper oder Profilstrang, der randseitig mit der Fahrzeugscheibe fest verbunden wird und der zur lösbaren Aufnahme des Wasserkastens eine Rastnut aufweist.

Damit im Übergangsbereich von der Scheibenfläche zum Profilkörper keine Stufe oder Kante entsteht, offenbart DE 200 08 555 U1 eine Abdichtungs-Anordnung für Fahrzeugscheiben mit einem im Querschnitt hakenförmigen Profilelement, das mit dem unteren Rand der Fahrzeugscheibe verklebt wird. Das Profilelement hat einen Federschenkel, der zusammen mit einer Keilrippe eine nach außen offene Rastausnehmung bildet. Diese nimmt den Wasserkasten auf, der rückseitig mit einer einspringenden Rippe versehen ist. Auf der Keilrippe sitzt eine Dichtlippe, die zwischen der Scheiben-Unterkante und dem oberen Rand der Wasserkasten-Abdeckung einpassbar ist und in montierter Position mit den Außenflächen des Wasserkastens und der Fahrzeugscheibe bündig abschließt. Unterhalb der Rastnut ist eine Pufferleiste aus einer weicheren Komponente vorgesehen, mit der sich die Abdichtungs-Anordnung an der Karosserie abstützen kann.

Aus der WO 2006/002891 A2 ist eine weitere Abdichtungs-Anordnung mit einer Randprofilleiste zum Verbinden einer Fahrzeugscheibe mit einem Wasserkasten bekannt, wobei zur Abstützung an der Karosserie zwei Dichtlippen vorgesehen sind.

Die Abstützung derartiger Profilelemente gegenüber der Karosserie ist notwendig, weil beim Einrasten des Wasserkastens in das Profilelement senkrecht zur Scheibenfläche ein relativ hoher Widerstand überwunden werden muss. Dieser wiederum ist notwendig, damit der Wasserkasten stets sicher an dem Profilelement fixiert ist und sich nicht während der Fahrt oder aufgrund anderer mechanischer oder thermischer Belastungen versehentlich lösen kann. Allerdings ist es zu Wartungszwecken oft notwendig, dass der Wasserkasten von der Fahrzeugscheibe gelöst und wieder montiert wird, beispielsweise um einen Filter zu wechseln.

Beim Montieren des Wasserkastens treten jedoch stets relativ hohe Kräfte auf, die unmittelbar auf die Verklebung des Profilkörpers mit der Fahrzeugscheibe einwirken. Fehlt daher eine Abstützung des Profilkörpers gegenüber der Karosserie oder ist kein Karosseriebereich vorhanden, an dem sich der Profilkörper abstützen kann, besteht die Gefahr, dass sich das Profil durch die auftretenden Montagekräfte von der Fahrzeugscheibe ablöst.

Ein weiterer Nachteil der vorbekannten Profile besteht darin, dass die Abstützung auf der Karosserie zu störenden Geräuschen führen kann, insbesondere dann, wenn die weichelastischen Stützelemente auf Dauer ihre Elastizität verlieren.

Ziel der Erfindung ist es, diese und weitere Nachteile des Standes der Technik zu überwinden und ein Profilelement zum Verbinden einer Fahrzeugscheibe mit einem Wasserkasten zu schaffen, das mit einfachen Mitteln kostengünstig aufgebaut ist und eine ebenso einfache wie rasche Montage des Wasserkastens gewährleistet, ohne die Verbindung zwischen dem Profilelement und der Fahrzeugscheibe zu belasten. Der an dem Profilelement montierte Wasserkasten soll dennoch dauerhaft fest fixiert sein und auch stärkeren Belastungen problemlos standhalten.

Hauptmerkmale der Erfindung sind im kennzeichnenden Teil von Anspruch 1 angegeben. Ausgestaltungen sind Gegenstand der Ansprüche 2 bis 11.

Dadurch ist es möglich, den Wasserkasten rasch und bequem zu montieren, denn dessen Rippe lässt sich im Vergleich zu herkömmlichen Profilen mit deutlich geringerem Widerstand bzw. Kraftaufwand in die zugehörige Rastausnehmung einfügen. Auf das Profilelement und dessen Verklebung mit der Fahrzeugscheibe wirken daher deutlich geringere Kräfte ein, so dass sich das Profil nicht mehr ungewollt von der Scheibe lösen kann, selbst nach wiederholtem Aus- und Einbau des Wasserkastens. Auch eine aufwendige Abstützung des Profilelements gegenüber der Karosserie ist nicht mehr notwendig, was sich günstig auf die Herstell- und Montagekosten auswirkt. Mithin können keine störenden Geräusche mehr auftreten, wenn sich die Abstützung des Profilelements und die Karosserie relativ zueinander bewegen.

Beim Herausziehen der Rippe hingegen muss durch die erfindungsgemäße Ausbildung des Rastelements eine deutlich größere Kraft aufgewendet werden, so dass der Wasserkasten nach der Montage stets fest an dem Profilelement fixiert ist. Der Wasserkasten kann sich selbst bei stärkeren mechanischen oder thermischen Belastungen nicht vom Profilelement oder gar vom Fahrzeug lösen, was eine hohe Betriebssicherheit gewährleistet: Die gesamte Anordnung ist einfach aufgebaut und außerordentlich stabil.

Für die Dimensionierung der Ein- und Ausbaukräfte ist es günstig, dass das bzw. jedes Rastelement in einem spitzen Winkel zur Fügerichtung angeordnet ist. Es kann beispielsweise beim Einführen der Rippe des Wasserkastens in die Rastausnehmung leicht zur Seite gedrückt bzw. gebogen werden, während beim Abnehmen des Wasserkastens die Rippe das Rastelement zunächst stauchen muss, bevor dieses die Rippe freigibt.

Durch die Winkelstellung des Rastelements gegenüber der Montagerichtung bildet das bzw. jedes Rastelement einen Widerhaken für die in die Rastausnehmung eingeführte Rippe des Wasserkastens, so dass dieser nur nach Überwinden des Widerhakens mit einer vorbestimmten Kraft von dem Profil gelöst werden kann, um beilspielsweise darunter angeordnete Bauteile warten oder reparieren zu können. Umgekehrt lässt sich der Widerstand des Widerhakens beim Einführen der Rippe in die Rastausnehmung relativ leicht überwinden, so dass das Profilelement und dessen Verbindung zur Fahrzeugscheibe kaum belastet werden.

Günstig ist ferner, wenn das bzw. jedes Rastelement ein elastisch verformbarer Körper ist. Dieser gibt beim Einführen der Rippe in die Rastausnehmung relativ leicht nach, während ein Ausweichen des Rastelements beim Herausziehen der Rippe aus dem Profilelement trotz der Elastizität deutlich erschwert ist, beispielsweise indem das Rastelement gestaucht werden muss, bevor es die Rippe freigibt. Um die Funktion des Widerhakens zu unterstützen, kann das bzw. jedes Rastelement an seiner freien Längskante mit einer Wölb- oder Nasenkante versehen sein, die sich - je nach Ausführungsform - an der Rippe des Wasserkastens und/oder an dem Profilelement abstützt.

Das bzw. jedes Rastelement ist innerhalb der Rastausnehmung angeordnet und kraft- und/oder formschlüssig mit der Rippe des Wasserkastens in Eingriff bringbar. Hierbei lassen sich verschiedenste Ausgestaltungen realisieren. So kann z.B. das Rastelement in einem Winkel zur Fügerichtung an einer Tragrippe des Profilelements und/oder an einem Federschenkel der Rastausnehmung angebracht sein.

Weitere Vorteile ergeben sich, wenn das bzw. jedes Rastelement zumindest abschnittsweise in die Eingriffsöffnung hineinragt. Dadurch gelangt die Rippe des Wasserkastens beim Einführen in die Rastausnehmung sofort mit dem Rastelement in Eingriff, wobei letzteres zunächst von der Rippe nach innen weggedrückt wird, so dass sich der Wasserkasten ohne großen Kraftaufwand leicht montieren lässt. Nach dem Einrasten der Rippe in der Rastausnehmung hingegen steht das Rastelement mit der Rippe in Eingriff. Es bildet zudem aufgrund seiner Winkelstellung einen Widerhaken und kann nur nach Überwinden einer größeren Kraft zur Seite gedrückt werden. Der Wasserkasten kann sich damit - trotz leichtgängiger Montage - nicht mehr unbeabsichtigt von dem Profilelement lösen.

Für zusätzliche Stabilität innerhalb des Profilelements sorgt die Ausgestaltung, wonach sich die Wölb- bzw. Nasenkante des bzw. jedes Rastelements in montierter Stellung des Wasserkastens an dessen Rippe abstützt. Letztere kann hierzu mit einem Hinterschnitt, einer Stufe o.dgl. versehen sein.

Ergänzend kann das bzw. jedes Rastelement an der Rippe des Wasserkastens angeordnet sein, wobei das Rastelement kraft- und/oder formschlüssig mit dem Profilelement in Eingriff bringbar ist. Auch hierdurch ist eine ebenso einfache wie rasche Montage des Wasserkastens gewährleistet, ohne dass die Verbindung zwischen dem Profilelement und der Fahrzeugscheibe während der Montage belastet wird. Gleichzeitig ist der an dem Profilelement montierte Wasserkasten derart fest fixiert, dass die gesamte Anordnung auch stärkeren Belastungen problemlos standhalten kann, gleichzeitig aber dennoch eine Demontage des Wasserkastens ermöglicht, ohne das Profilelement zu beschädigen.

Das Rastelement wirkt in dieser Ausführungsform gegenüber dem Profilelement als Widerhaken, der die Fügekräfte deutlich reduziert, dennoch aber den montierten Wasserkasten fest fixiert. Die Wölb- oder Nasenkante des bzw. jedes Rastelements stützt sich dabei an der Tragrippe oder dem Federschenkel ab, die hierzu einen Hinterschnitt, eine Stufe o.dgl. aufweisen können.

Zwischen dem ersten Abschnitt und dem zweiten Abschnitt des Profilelements ist eine Tragrippe ausgebildet, welche das wenigstens eine Dichtelement trägt. Letzteres sorgt für die notwendige Abdichtung der Flächenübergänge zwischen dem Wasserkasten und der Fahrzeugscheibe, während die Tragrippe selbst zwischen dem unteren Rand der Windschutzscheibe und der Rippe des Wasserkastens einen elastischen Klemm- und/oder Stützkörper bildet.

Die Rastausnehmung des Profilelements wird von einem Federschenkel und der Tragrippe gebildet, wobei das freie Ende des Federschenkels und die Tragrippe eine Eingriffsöffnung begrenzen. Dabei kann der Federschenkel im Wesentlichen L-, U- oder hakenförmig ausgebildet sein. Zusätzlich kann das freie Ende des Federschenkels innerhalb der Rastausnehmung mit einer Hinterschneidung versehen sein, in welche die Rippe des Wasserkastens oder das Rastelement eingreifen können.

Die Rippe des Wasserkastens wird mithin in verrasteter Position durch den nach außen vorspringenden Federschenkel stets fest umschlossen, während die Tragrippe für die Rippe einen Klemmkörper bildet. Gleichzeitig stützt die Tragrippe das Dichtelement, wodurch das Profilelement nicht nur den Wasserkasten und die Fahrzeugscheibe gegeneinander abdichtet, sondern zudem auch kraft- und formschlüssig miteinander verbindet. Eine zusätzliche oder ergänzende Rastfunktion kann durch eine Hinterschneidung an der Tragrippe innerhalb der Rastausnehmung gebildet werden, beispielsweise für die Rippe des Wasserkastens oder das Rastelement.

Das bzw. jedes Dichtelement und/oder das bzw. jedes Rastelement sind bevorzugt stoffschlüssig mit der Tragrippe verbunden. Das Dichtelement und die Tragrippe können aber auch einstückig ausgebildet sein. Dadurch lassen sich die verschiedensten Ausgestaltungen realisieren, indem die einzelnen Elemente ein- oder mehrteilig ausgebildet werden.

Das Dichtelement und das Rastelement sind aus einem weichelastischen Material gefertigt, während die Abschnitte des Profilelements und die Tragrippe aus einem härteren, aber dennoch elastischen Material bestehen. Das gesamte Profilelement besteht aus einer Materialkombination, namentlich in Form eines Verbundkörpers aus weichem und hartem Material. Die einzelnen Elemente können aus einer Materialkombination bestehen, namentlich in Form eines Verbundkörpers aus weichem und hartem Material. So kann beispielsweise die Dichtlippe außen weich und innen hart sein; sie kann speziell innen massiv oder hohl-hart und außen weich sein. Andere Varianten sind ebenfalls möglich. Das Rastelement kann außen weich und innen aus einem härteren aber dennoch flexiblen Material bestehen. Ebenso kann sie verschiedene Querschnittsformen haben, beispielsweise rechteckig, oval oder konkav. Sie kann ferner eine individuelle, der Rippe des Wasserkastens angepasste Form aufweisen oder zumindest abschnittsweise als Hohlprofil ausgebildet sein. Die Tragrippe des Profilelements kann im Wesentlichen keilförmig, stufenförmig, T-förmig oder U-förmig ausgebildet sein. Weitere Formgestaltungen sind ebenfalls denkbar.

Der erste Abschnitt, der zweite Abschnitt und/oder die Tragrippe sind zumindest abschnittsweise mit einer elastischen Versteifungs-Einlage versehen. Das gesamte Profil wird dadurch hoch belastbar und dauerhaft stabil.

Fertigungstechnisch ist es günstig, wenn der erste Abschnitt, der zweite Abschnitt und/oder die Tragrippe als Strangpressprofil ausgebildet sind. Dies wirkt sich zudem günstig auf die Herstellkosten aus.

Die gesamte Abdichtungsanordnung ist für Fahrzeugscheiben vorgesehen, insbesondere für den unteren Bereich einer Kraftfahrzeug-Windschutzscheibe. Sie besteht aus der Fahrzeugscheibe, dem daran angebrachten Profilelement und dem darin festlegbaren Wasserkasten.

Das Profilelement ermöglicht eine rasche und einfache Montage des Wasserkastens ohne großen Kraftaufwand, so dass die Verbindung zwischen dem Profilelement und der Fahrzeugscheibe auch bei wiederholter Montage des Wasserkastens nicht belastet wird. Gleichzeitig wird der Wasserkasten in montierter Stellung kraft- und formschlüssig im Profilelement gehalten, so dass eine dauerhaft feste Verbindung entsteht, die auch stärkeren mechanischen und thermischen Belastungen dauerhaft standhält. Dennoch lässt sich der Wasserkasten wieder abnehmen z.B. um einen Pollenfilter zu wechseln, wobei jedoch eine größere Kraft aufgewendet werden muss als bei der Montage.

Weitere Merkmale, Einzelheiten und Vorteile der Erfindung ergeben sich aus dem Wortlaut der Ansprüche sowie aus der folgenden Beschreibung von Ausführungsbeispielen anhand der Zeichnungen. Es zeigen:
- Fig. 1: eine schematische Schnittansicht einer montierten Abdichtungs-Anordnung mit einem erfindungsgemäßen Profilelement,
- Fig. 2: eine schematische Schnittansicht der Abdichtungs-Anordnung von Fig. 1 vor der Montage des Wasserkastens und
- Fig. 3: eine schematische Schnittansicht der Abdichtungs-Anordnung von Fig. 1 während des Fügevorgangs.

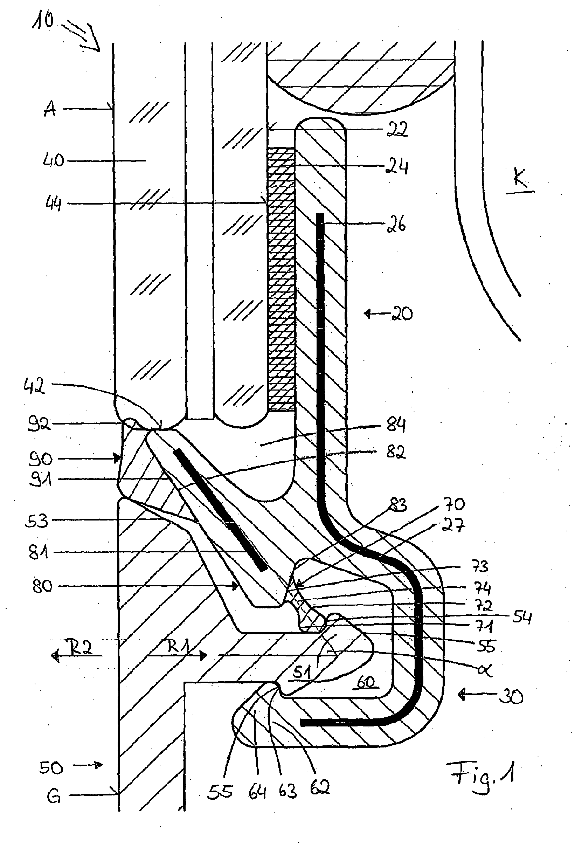

Das in Fig. 1 allgemein mit 10 bezeichnete Profilelement dient der Verbindung einer Fahrzeugscheibe 40 mit einem Wasserkasten 50. Die Fahrzeugscheibe 40 ist beispielsweise eine Windschutzscheibe aus Verbundglas, die in einer (nicht dargestellten) Karosserie eines (ebenfalls nicht gezeigten) Pkws eingebaut wird. Der gewöhnlich aus einem Kunststoff gefertigte Wasserkasten 50 schließt mit einer Oberkante 53 an die meist gebogene Unterkante 42 der Windschutzscheibe 40 an und führt von dieser abfließendes Wasser nach außen ab. Die Außenfläche G des Wasserkastens 50 liegt bevorzugt fluchtend zur Außenfläche A der Windschutzscheibe 40.

Das Profilelement 10 ist bevorzugt ein Strangpressprofil, dessen Länge der Breite der Windschutzscheibe 40 bzw. der Breite des Wasserkastens entspricht. Es besteht aus einem oder mehreren Kunststoffen (Thermoplaste oder Duroplaste) jeweils geeigneter Härte, beispielsweise Polypropylen (PP), Polyvinylchlorid (PVC), Acrylnitril-Butadien-Styrol-Copolymeren (ABS) o.dgl. und/oder aus Kombinationen davon. Verwendbar sind aber auch Elastomere bzw. Gummiwerkstoffe wie z.B. EPDM. Ein erster Abschnitt 20 des Profilelements 10 hat zur Festlegung an der Fahrzeugscheibe 40 eine Fläche 22. Auf dieser ist eine Haftschicht 24 in Form eines doppelseitigen Klebebandes aufgebracht, das beispielsweise hitzeaktivierbar ist. Das Profilelement 10 wird mit dem Klebeband 24 entlang der Scheibenkante 42 auf der Rückseite 44 der Fahrzeugscheibe 40 angepresst und mit dieser verklebt.

Das Profilelement 10 hat ferner einen zweiten Abschnitt 30, der zur lösbaren Befestigung des Wasserkastens 50 eine Rastausnehmung 60 aufweist, wobei der Wasserkasten 50 rückseitig mit einer ein- bzw. vorspringenden Rippe 51 versehen ist, die kraft- und/oder formschlüssig in der Rastausnehmung 60 festlegbar ist. Man erkennt in Fig. 1, dass sich die Rippe 51 des Wasserkastens in einer Richtung R1 erstreckt, die etwa senkrecht zur Außenfläche G des Wasserkastens 50 bzw. zur Außenfläche A der Frontscheibe 40 verläuft. Die Anordnung von Fahrzeugscheibe 40, Profilelement 10 und Wasserkasten 50 ist ferner so getroffen, dass die federelastische Rippe 51 des Wasserkastens 50 in Richtung R1 in die Rastausnehmung 60 des Profilelements 10 einführbar und in entgegengesetzter Richtung R2 wieder aus dem Profilelement 10 lösbar ist.

Die Rastausnehmung 60 wird von einem im Wesentlichen L-, U- oder hakenförmigen Federschenkel 62 sowie einer Tragrippe 80 begrenzt, die zwischen dem ersten Abschnitt 20 und dem zweiten Abschnitt 30 des Profilelements 10 ausgebildet ist. Das freie Ende 64 des Federschenkels 62 und die Tragrippe 80 bilden dabei eine Eingriffsöffnung 61 für die Rippe 51 des Wasserkastens 50.

Die Tragrippe 80 ist im Querschnitt etwa keil- und/oder T-förmig ausgebildet. Sie bildet zwischen der Scheiben-Unterkante 42 und der nach innen vorspringenden Rippe 51 des Wasserkastens 50 einen Klemm- bzw. Stützkörper, der auf einer Fläche 91 das Dichtelement 90 trägt. Letzteres ist bevorzugt aus einem weich-elastischen Material gefertigt, beispielsweise einem thermoplastischem Elastomer (TPE), einem Moosgummi oder einem anderen geeigneten Material wie z.B. einem Elastomer oder Gummiwerkstoff. Es liegt mit einer Nasenkante 92 dichtend an der Unterkante 42 der Fahrzeugscheibe 40 an und wird - nach der Montage des Wasserkastens 50 - zwischen der Scheiben-Unterkante 42 und der Oberkante 53 des Wasserkastens 50 derart verpresst, dass die (nicht näher bezeichnete) Außenfläche des Dichtelements 90 bündig mit der Außenfläche A der Scheibe 40 und der Außenfläche G des Wasserkastens 50 abschließt. Es entsteht mithin ein im Wesentlichen glatter und flächenbündiger Übergang zwischen der Fahrzeugscheibe 40 und dem Wasserkasten 50.

Das Dichtelement 90 ist bevorzugt stoffschlüssig mit der Tragrippe 80 verbunden. Es kann aber auch einstückig mit diesem ausgebildet sein.

Die Tragrippe 80 und der erste Abschnitt 20 des Profilelements 10 bilden im Bereich der Scheiben-Unterkante 42 bevorzugt eine Höhlung 84, wodurch die in montierter Position gegen die Scheibe 40 abstützende Tragrippe 80 elastisch nachgeben kann. Dadurch ist nicht nur eine dauerhaft gute und zuverlässige Abdichtung gewährleistet. Die Tragrippe 80 und die Dichtlippe 90 können auch Toleranzen zwischen der Scheibe 40 und dem Wasserkasten 50 ausgleichen.

Der Federschenkel 62 ist an seinem freien Ende 64 innerhalb der Rastausnehmung 60 mit einer Hinterschneidung 63 versehen. Diese hintergreift in montierter Stellung des Wasserkastens 50 eine an der Rippe 51 ausgebildete Nasenkante 52, so dass die Rippe 51 stets kraft- und oder formschlüssig in der Rastausnehmung 60 des Profilelements 10 fixiert ist. Um die Rippe 51 in die Rastausnehmung 60 besser einführen zu können, sind die Nasenkante 52 und das freie Ende 64 des Federschenkels 62 mit (nicht näher bezeichneten) Schrägflächen versehen. Auch die Tragrippe 80 ist innerhalb der Rastausnehmung 60 mit einer Hinterschneidung 83 versehen, deren Funktion weiter unten erläutert wird.

Um eine ebenso einfache wie rasche Montage des Wasserkastens 50 gewährleisten zu können - ohne dabei die Klebeverbindung zwischen dem Profilelement 10 und der Fahrzeugscheibe 40 zu belasten - ist innerhalb der Rastausnehmung 60 ein Rastelement 70 in Form einer Rippe vorgesehen, die sich in Längsrichtung des Profils 10 erstreckt. Es handelt sich um einen zumindest teilweise elastisch verformbaren Körper, der aus einem weich-elastischen Material, beispielsweise einem thermoplastischem Elastomer (TPE), einem Moosgummi oder einem anderen geeigneten Material, gefertigt und derart ausgebildet ist, dass das Einführen der Rippe 51 des Wasserkastens 50 in die Rastausnehmung 60 in Fügerichtung R1 mit relativ geringem Kraftaufwand möglich ist, während das Herausziehen der Rippe 51 aus der Rastausnehmung 60 in entgegengesetzter Richtung R2 deutlich erschwert wird.

Wie Fig. 1 zeigt, liegt das Rastelement 70 innerhalb der Rastausnehmung 60 in einem Winkel α zur Richtung R1, R2 und damit in einem spitzen Winkel zur Rippe 51 des Wasserkastens 50. Es ragt ferner zumindest abschnittsweise in die Eingriffsöffnung 61 der Rastausnehmung 60 hinein und ist innerhalb dieser kraft- und/oder formschlüssig mit der Rippe 51 des Wasserkastens 50 in Eingriff bringbar, so dass letzterer in montierter Stellung dauerhaft fest aber lösbar fixiert wird.

Um dies zu unterstützen ist das Rastelement 70 an seiner freien Längskante 72 mit einer Wölb- oder Nasenkante 71 versehen ist, während die Rippe 51 des Wasserkastens 50 mit einer zugeordneten Nasenkante 52 bzw. Hinterschneidung versehen ist. Dadurch kann sich das freie Ende des Rastelements 70 bzw. dessen Wölb- oder Nasenkante 71 in montierter Stellung des Wasserkastens 50 an dessen ebenfalls in Längsrichtung des Profilelements 10 erstreckenden Rippe 51 abstützen, so dass eine dauerhaft feste Verrastung gewährleistet ist.

Wie Fig. 1 weiter zeigt, ist das Rastelement 70 ebenso wie das Dichtelement 90 an der Tragrippe 80 festgelegt und zwar im Bereich der Hinterschneidung 83. Es hat ferner zwischen dem Anbindungsbereich 73 an der Tragrippe 80 und der endseitig ausgebildeten Wölb- oder Nasenkante 71 einen verjüngt ausgebildeten Abschnitt 74, so dass sich eine etwa konkave Querschnittsfläche ergibt. Diese ermöglicht es dem Rastelement 70 seitlich oder quer zu dessen Längsrichtung auszuweichen, sobald die Rippe 51 des Wasserkastens 50 in die Rastausnehmung 60 eingeführt wird. Um diesen Effekt zu unterstützen ist die Rippe 51 endseitig mit einer Schrägfläche oder -flanke 55 versehen, welche das Rastelement 70 zur Seite drücken kann. Je nach gewünschtem Kraftaufwand für das Einführen der Rippe 51 in die Rastausnehmung 60 kann das Rastelement 70 im Querschnitt auch keil- oder quaderförmig ausgebildet sein.

Das Rastelement 70 ist stoffschlüssig mit der Tragrippe 80 verbunden. Das Dichtelement 90 ist bevorzugt stoffschlüssig mit der Tragrippe 80 verbunden. Es kann aber auch einstückig mit dieser ausgebildet sein.

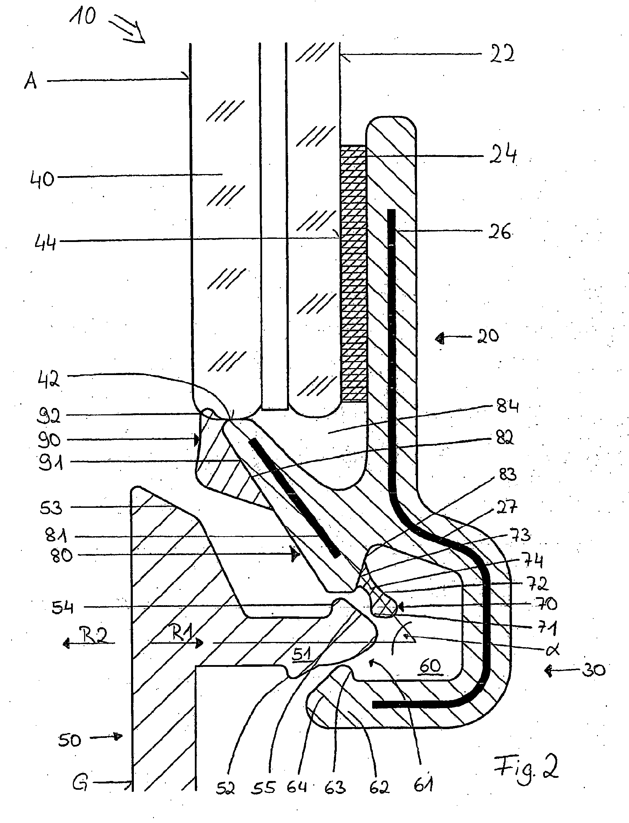

Fig. 2 veranschaulicht die Abdichtungs-Anordnung bestehend aus Fahrzeugscheibe 40, daran befestigtem Profilelement 10 und Wasserkasten 50 in noch nicht montiertem Zustand. Die Rippe 51 des Wasserkastens 50 ist mithin noch nicht in der Rastausnehmung 60 des Profilelements 10 verrastet.

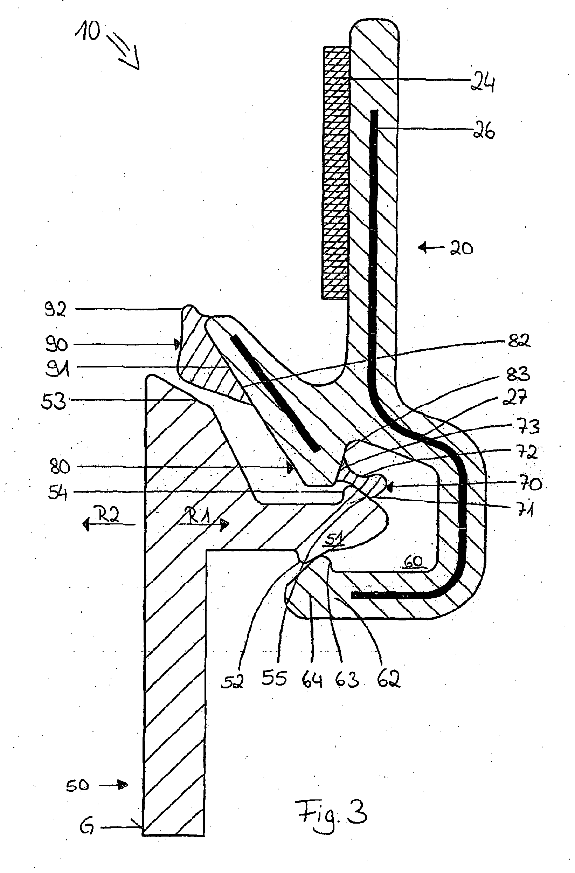

Man erkennt jedoch in Fig. 3, dass die Rippe 51 des Wasserkastens 50 beim Einführen in die Rastausnehmung 60 das in dem Winkel α zur Fügerichtung R1 in die Eingriffsöffnung 61 der Rastausnehmung 60 hineinragende Rastelement 70 verdrängt. Dabei schiebt die Rippe 51 das Rastelement 70 mit seiner Schrägflanke 55 in die Hinterschneidung 83 des Tragkörper 80 hinein zur Seite, was aufgrund des gewählten Querschnitts sowie des gewählten Materials für das Rastelement 70 relativ leicht ausführbar ist. Die Rippe 51 des Wasserkastens 50 lässt sich dadurch mit relativ geringem Kraftaufwand in das Profilelement 10 einrasten, dessen Klebeverbindung zur Fahrzeugscheibe 40 mithin kaum belastet wird. Eine zusätzliche Abstützung des Profilelements 10 gegenüber der Karosserie ist nicht erforderlich.

Sobald der Wasserkasten 50 seine Endstellung erreicht hat, hintergreift das Rastelement 70 die an der Rippe 51 ausgebildete Hinterschneidung 54, wobei sich die Wölb- oder Nasenkante 71 des Rastelements 70 kraft- und/oder formschlüssig an der Rippe 51 abstützt. Das Rastelement 70 bildet mithin einen Widerhaken, der den Wasserkasten 50 bzw. dessen Rippe 51 kraft- und formschlüssig in der Rastausnehmung 60 bzw. am Profilelement 10 festlegt.

Will man den Wasserkasten 50 wieder aus seiner Verrastung mit dem Profilelement 10 lösen, muss die Rippe 51 den innerhalb der Rastausnehmung 60 quer stehenden Widerhaken 70 überwinden, was jedoch deutlich mehr Kraft erfordert als der Fügevorgang. Der Wasserkasten 50 ist damit stets sicher und zuverlässig in dem Profilelement 10 verankert, kann aber bei Bedarf dennoch ausgebaut und wie oben beschrieben ohne großen Kraftaufwand wieder montiert werden.

In den ersten Abschnitt 20 des Profilelements 10 und in den Federschenkel 62 des zweiten Abschnitts 30 ist bevorzugt eine Versteifungs-Einlage 26 eingearbeitet, beispielsweise ein Aluminium- oder Stahlband. Diese Versteifungs-Einlage 26 kann bis an einen Biegungs-Übergang 27 zwischen dem ersten Abschnitt 20 und dem zweiten Abschnitts 30 des Profilelements 10 reichen oder - wie dargestellt - sich bis in den Federschenkel 62 hinein erstrecken. Sie folgt dabei allgemein der Form des Profilelements 10, kann aber auch kürzer oder länger als gezeichnet ausgebildet sein. Eine Versteifungseinlage 81 innerhalb der Tragrippe 80 erhöht weiter die Stabilität des Profilelements 10 und die Tragfähigkeit der Rippe 80.

Im mittleren Teilflächen-Bereich des ersten Abschnitts 20 kann ferner eine Perforation in Form einer Lochreihe (nicht dargestellt) angebracht sein. Zwei oder mehr Lochreihen sind ebenfalls möglich. Dadurch kann Kleber einer ergänzend über dem ersten Abschnitt 20 des Profilelements 10 aufgebrachten (nicht gezeigten) Kleberaupe bis an die Rückseite 44 der Schreibe 40 vordringen.

Die Erfindung ist nicht auf eine der vorbeschriebenen Ausführungsformen beschränkt, sondern in vielfältiger Weise abwandelbar. So kann man das Rastelement anstelle an der Tragrippe 80 an dem Federschenkel 62 vorsehen. Die Rippe 51 des Wasserkastens 50 wäre dann entsprechend gespiegelt auszubilden. Denkbar ist aber auch zwei Rastelemente 70 vorzusehen, die zu beiden Seiten der Rippe 51 angeordnet sind. Eine weitere Variante sieht vor, dass wenigstens ein Rastelement 70 an der Rippe 51 des Wasserkastens 50 angeordnet ist. Die Wölb- oder Nasenkante 71 des bzw. jedes Rastelements 70 würde sich dabei in montierter Stellung des Wasserkastens 50 an dem Profilelement 10 abstützen, so dass das Rastelement kraft- und/oder formschlüssig mit dem Profilelement 10 in Eingriff gelangt. Man kann ferner je ein Rastelement 70 an dem Profilelement 10 und eines an der Rippe 51 des Wasserkastens 50 ausbilden.

Bei allen Ausführungsformen arbeitet das Rastelement 70 stets in der Art eines Widerhakens, der das Einführen der Rippe 51 in die Rastausnehmung 60 ohne größeren Kraftaufwand zuläßt. Das Herausziehen der Rippe 51 aus der Rastausnehmung 60 jedoch erschwert, so dass der Wasserkasten 50 leicht montierbar aber stets fest fixiert und bei Bedarf demontierbar ist.

Zusammenfassend ist festzuhalten, dass ein Profilelement 10 zum Verbinden einer Fahrzeugscheibe 40 einen an der Fahrzeugscheibe 40 festlegbaren ersten Abschnitt 20 und einen eine Rastausnehmung 60, zur lösbaren Befestigung eines Wasserkastens 50, bildenden zweiten Abschnitt 30 aufweist. Der Wasserkasten 50 weist eine Rippe 51 auf, die kraft- und /oder formschlüssig in der Rastausnehmung 60 festlegbar ist. Zwischen der Unterkante 42 der Fahrzeugscheibe 40 und dem oberen Rand 53 des Wasserkastens 50 ist wenigstens ein Dichtelement 90 einpassbar. Diese bildet einen im Wesentlichen glatten und flächenbündigen Übergang zwischen der Fahrzeugscheibe 40 und dem Wasserkasten 50.

Ein Rastelement 70 für die Rippe 51 des Wasserkastens 50 ist derart ausgebildet, dass es das Einführen der Rippe 51 in die Rastausnehmung 60 des Profilelements 10 erleichtert, das Herausziehen der Rippe 51 aus der Rastausnehmung 60 in entgegengesetzter Richtung hingegen deutlich erschwert.

Das elastisch verformbare Rastelement 70 ist in einem Winkel a zur Fügerichtung R1 angeordnet, wodurch es für die verrastete Rippe 51 des Wasserkastens 50 einen Widerhaken bildet. Das zumindest abschnittsweise in die Eingriffsöffnung 61 der Rastausnehmung 60 hineinragende Rastelement 70 stützt sich mit seiner Wölb- oder Nasenkante 71 in montierter Stellung an der Rippe 51 des Wasserkastens 50 oder am Profilelement 10 ab, welche dazu Hinterschneidungen 52, 63, 83 aufweisen.

Zwischen dem ersten 20 und dem zweiten Abschnitt 30 des Profilelements 10 ist eine Tragrippe 80 vorgesehen, die keilförmig und/oder T-förmig bzw. U-förmig sein kann. An dieser Tragrippe 80 steht das wenigstens eine Dichtelement 90 nach außen vor.

Die Rastausnehmung 60 wird von der Tragrippe 80 und einem Federschenkel 62 gebildet, der im Querschnitt L-, U- oder hakenförmig ausgebildet ist. Das Rastelement 70 und das Dichtelement 90 können mit der Tragrippe 80 einstückig oder fest verbunden sein und weisen insbesondere einen weich-elastisch verformbaren Wölbkörper auf.

Das Profilelement 10 und/oder das Rastelelement 70 und/oder die Dichtlippe 90 können aus einer Materialkombination bestehen, z.B. in Form eines Verbundkörpers, der außen weich und innen hart ist. Versteifungseinlagen 26, 81 erhöhen die Elastizität. Zweckmäßig weist die Anlagefläche 22 des Profilelements 10 zueinander höhenversetzte Berührungsbereiche auf. Dazwischen kann am - gegebenenfalls perforierten - ersten Abschnitt 20 eine Haftschicht eingeschlossen sein, z.B. ein satt in einer Auskehlung anliegendes, doppelseitig beschichtetes Klebeband, das auch perforiert sein kann.

Ein Profilelement 10 zum Verbinden einer Fahrzeugscheibe 40 mit einem Wasserkasten 50 hat einem ersten Abschnitt 20, der an der Fahrzeugscheibe festlegbar ist und einem zweiten Abschnitt 30, der zur lösbaren Befestigung des Wasserkastens 50 eine Rastausnehmung 60 hat oder bildet. Der Wasserkasten 50 weist eine Rippe 51 auf, die kraft- und/oder formschlüssig in der Rastausnehmung 60 festlegbar ist, und wenigstens ein Dichtelement 90, das in montierter Position des Wasserkastens 50 einen im Wesentlichen glatten und flächenbündigen Übergang zwischen der Fahrzeugscheibe 40 und dem Wasserkasten 50 bildet. Um eine ebenso einfache wie rasche Montage des Wasserkastens zu gewährleisten, ohne die Verbindung zwischen dem Profilelement und der Fahrzeugscheibe zu belasten, ist vorgesehen, dass wenigstens ein Rastelement 70, welches derart ausgebildet ist, dass das Einführen der Rippe 51 des Wasserkastens 50 in die Rastausnehmung 60 in einer ersten Richtung R1 erleichtert, das Herausziehen der Rippe 51 aus der Rastausnehmung 60 in entgegengesetzter Richtung R2 hingegen erschwert ist.

Sämtliche aus den Ansprüchen, der Beschreibung und der Zeichnung hervorgehenden Merkmale und Vorteile, einschließlich konstruktiver Einzelheiten, räumlicher Anordnungen und Verfahrensschritten, können sowohl für sich als auch in den verschiedensten Kombinationen erfindungswesentlich sein.

**Bezugszeichenliste**

| | | | |
|---|---|---|---|
| A | Außenfläche (von 40) | 53 | Oberkante |
| G | Außenfläche (von 50) | 54 | Nasenkante/Hinterschneidung |
| R1 | Richtung | 55 | Schrägfläche/-flanke |
| R2 | Richtung | | |
| K | Karosserie | 60 | Rastausnehmung |
| α | Winkel | 61 | Öffnung |
| | | 62 | Federschenkel |
| 10 | Profilelement | 63 | Hinterschneidung |
| | | 64 | freies Ende |
| 20 | erster Abschnitt | | |
| 22 | Fläche | 70 | Rastelement |
| 24 | Haftschicht | 71 | Nasenkante |
| 26 | Versteifungs-Einlage | 72 | Längskante |
| 27 | Biegungs-Übergang | 73 | Anbindungsbereich |
| 28 | Kleberaupe | 74 | Abschnitt |
| | | | |
| 30 | zweiter Abschnitt | 80 | Tragrippe |
| | | 81 | Versteifungs-Einlage |
| 40 | Fahrzeugscheibe | 82 | Hart/Weich-Grenze |
| 42 | Scheiben-Unterkante | 83 | Hinterschneidung |
| 44 | Rückseite | 84 | Höhlung |
| | | | |
| 50 | Wasserkasten | 90 | Dichtlippe |
| 51 | Rippe | 91 | (Schräg-) Fläche |
| 52 | Nasenkante/Hinterschneidung | 92 | Nasenkante |

## Patentansprüche

1. Profilelement (10) zum Verbinden einer Fahrzeugscheibe (40) mit einem Wasserkasten (50), mit einem ersten Abschnitt (20), der an der Fahrzeugscheibe festlegbar ist, mit einem zweiten Abschnitt (30), der zur lösbaren Befestigung des Wasserkastens (50) eine Rastausnehmung (60) hat oder bildet, wobei der Wasserkasten (50) eine Rippe (51) aufweist, die kraft- und/oder formschlüssig in der Rastausnehmung (60) festlegbar ist, und mit wenigstens einem Dichtelement (90), das zwischen der Unterkante (42) der Fahrzeugscheibe (40) und dem oberen Rand (53) des Wasserkastens (50) einpassbar ist und in montierter Position des Wasserkastens (50) einen im Wesentlichen glatten und flächenbündigen Übergang zwischen der Fahrzeugscheibe (40) und dem Wasserkasten (50) bildet, wobei zwischen dem ersten Abschnitt (20) und dem zweiten Abschnitt (30) des Profilelements (10) eine Tragrippe (80) ausgebildet ist, welche das wenigstens eine Dichtelement (90) trägt, wobei die Rastausnehmung (60) von einem Federschenkel (62) und der Tragrippe (80) gebildet ist, wobei das freie Ende (64) des Federschenkels (62) und die Tragrippe (80) eine Eingriffsöffnung (61) der Rastausnehmung (60) begrenzen, wobei wenigstens ein innerhalb der Rastausnehmung (60) angeordnetes Rastelement (70) vorgesehen ist, welches kraft- und/oder formschlüssig mit der Rippe (51) des Wasserkastens (50) in Eingriff bringbar ist, wobei das Einführen der Rippe (51) des Wasserkastens (50) in die Rastausnehmung (60) in einer ersten Richtung (R1) erleichtert, das Herausziehen der Rippe (51) aus der Rastausnehmung (60) in entgegengesetzter Richtung (R2) hingegen erschwert ist, **dadurch gekennzeichnet, dass** das wenigstens eine Rastelement (70) rippenförmig ausgebildet ist, sich in Längsrichtung des Profilelements erstreckt und in einem spitzen Winkel (alpha) zur Richtung (R1, R2) und zur Rippe (51) des Wasserkastens (50) angeordnet ist, dass das wenigstens eine Rastelement (70) einen Widerhaken bildet und dass das Rastelement (70) aus einem weichelastischen Material gefertigt ist und die Abschnitte (20, 30) des Profilelements (10) und die Tragrippe (80) aus einem härteren, aber dennoch elastischen Material bestehen.

2. Profilelement nach Anspruch 1, **dadurch gekennzeichnet, dass** das wenigstens eine Rastelement (70) an seiner freien Längskante (72) mit einer Wölb- oder Nasenkante (71) versehen ist.

3. Profilelement nach Anspruch 2, **dadurch gekennzeichnet, dass** sich die Wölb- oder Nasenkante (71) des wenigstens einen Rastelements (70) in montierter Stellung des Wasserkastens (50) an dessen Rippe (51) abstützt.

4. Profilelement nach einem der Ansprüche 1 bis 3, **dadurch gekennzeichnet, dass** das wenigstens eine Rastelement (70) zumindest abschnittsweise in die Eingriffsöffnung (61) hineinragt.

5. Profilelement nach einem der Ansprüche 1 bis 5, **dadurch gekennzeichnet, dass** der Federschenkel (62) im Wesentlichen L-, U- oder hakenförmigen ausgebildet ist.

6. Profilelement nach einem der Ansprüche 1 bis 5, **dadurch gekennzeichnet, dass** das freie Ende (64) des Federschenkels (62) innerhalb der Rastausnehmung (60) mit einer Hinterschneidung (63) versehen ist.

7. Profilelement nach einem der Ansprüche 1 bis 6, **dadurch gekennzeichnet, dass** die Tragrippe (80) innerhalb der Rastausnehmung (60) eine Hinterschneidung (83) bildet.

8. Profilelement nach einem der Ansprüche 1 bis 7, **dadurch gekennzeichnet, dass** das wenigstens eine Dichtelement (90) und/oder das das wenigstens eine Rastelement (70) stoffschlüssig mit der Tragrippe (80) verbunden sind.

9. Profilelement nach einem der Ansprüche 1 bis 8, **dadurch gekennzeichnet, dass** das wenigstens eine Dichtelement (90) mit der Tragrippe (80) einstückig ausgebildet ist.

10. Profilelement nach einem der Ansprüche 1 bis 9, **dadurch gekennzeichnet, dass** der erste Abschnitt (20), der zweite Abschnitt (30) und/oder die Tragrippe (80) zumindest abschnittsweise mit einer Versteifungs-Einlage (26) versehen sind.

11. Profilelement nach einem der Ansprüche 1 bis 10, **dadurch gekennzeichnet, dass** der erste Abschnitt (20), der zweite Abschnitt (30) und/oder die Tragrippe (80) als Strangpressprofil ausgebildet sind.

12. Abdichtungsanordnung für den Übergang zwischen einer Fahrzeugscheibe (40) und einem Wasserkasten (50), insbesondere für den unteren Bereich einer Kraftfahrzeug-Windschutzscheibe, mit einem Profilelement (10) nach einem der Ansprüche 1 bis 11.

## Claims

1. Profile member (10) to connect a vehicle window (40) to a water gutter (50), having a first segment (20) affixable to the vehicle window, having a second segment (30) having or forming a detent cavity (60) to detachably affix the water gutter (50), in which case the water gutter (50) has a rib (51) affixable in the detent cavity (60) by frictional and/or positive engagement, and having at least one sealing member (90) which can be fitted in between the bottom edge (42) of the vehicle window (40) and the top edge (53) of the water gutter (50) and which, when the water gutter (50) is in a fitted position, creates a substantially smooth and planarly flush transition between the vehicle window (40) and the water gutter (50), there being formed between the first segment (20) and the second segment (30) of the profile member (10) a supporting rib (80) which supports the at least one sealing member (90), the detent cavity (60) being formed by a resilient limb (62) and the supporting rib (80), with the supporting rib (80) and the free end (64) of the resilient limb (62) defining an aperture for engagement (61) of the detent cavity (60), there being provided at least one detent element (70), arranged within the detent cavity (60), which can be brought into frictional and/or positive engagement with the rib (51) of the water gutter (50), the insertion of the rib (51) of the water gutter (50) into the detent cavity (60) in a first direction (R1) being facilitated, but the extraction of the rib (51) from the detent cavity (60) in the opposite direction (R2) on the other hand being made difficult, **characterised in that** the at least one detent element (70) is in rib form, extends in the longitudinal direction of the profile member (10) and is arranged at an acute angle (alpha) to the direction (R1, R2) and to the rib (51) of the water gutter (50), **in that** the at least one detent element (70) forms a barb, and **in that** the detent element (70) is made of a soft elastic material whereas the segments (20, 30) of the profile element (10) and the supporting rib (80) are made of a harder but still elastic material.

2. Profile member according to claim 1, **characterised in that** the at least one detent element (70) is provided at its free longitudinal edge (72) with a curved or beaked edge (71).

3. Profile member according to claim 2, **characterised in that**, when the water gutter (50) is in an installed position, the curved or beaked edge (71) of the at least one detent element (70) is supported on its rib (51).

4. Profile member according to one of claims 1 to 3, **characterised in that** at least a portion or portions of the at least one detent element (70) project into the aperture for engagement (61).

5. Profile member according to one of claims 1 to 5, **characterised in that** the resilient limb (62) is substantially L, U or barb-shaped.

6. Profile member according to one of claims 1 to 5, **characterised in that** the free end (64) of the resilient limb (62) is provided with an undercut (63) within the detent cavity (60).

7. Profile member according to one of claims 1 to 6, **characterised in that** the supporting rib (80) forms an undercut (83) within the detent cavity (60).

8. Profile member according to one of claims 1 to 7, **characterised in that** the at least one sealing member (90) and/or the at least one detent element (70) are connected to the supporting rib (80) by bonding or coalescence.

9. Profile member according to one of claims 1 to 8, **characterised in that** the at least one sealing member (90) is formed in one piece with the supporting rib (80).

10. Profile member according to one of claims 1 to 9, **characterised in that** at least a portion or portions of the first segment (20), the second segment (30), and/or the supporting rib (80) are provided with a stiffening insert (26).

11. Profile member according to one of claims 1 to 10, **characterised in that** the first segment (20), the second segment (30), and/or the supporting rib (80) take the form of an extruded profile.

12. Sealing system for the transition between a vehicle window (40) and a water gutter (50), particularly for the bottom region of a motor vehicle windscreen, having a profile member (10) according to one of claims 1 to 11.

## Revendications

1. Élément profilé (10) pour relier une vitre (40) de véhicule à une boîte à eau (50), comportant une première partie (20) propre à être fixée à la vitre du véhicule, comportant une deuxième partie (30) munie ou formant un évidement d'encliquetage (60) pour la fixation amovible de la boîte à eau (50), ladite boîte à eau (50) comprenant une ailette (51) destinée à être fixée par force et/ou par conjugaison de forme dans l'évidement d'encliquetage (60), et comportant au moins un élément d'étanchéité (90) apte à être ajusté entre le bord inférieur (42) de la vitre (40) du véhicule et le bord supérieur (53) de la boîte à eau (50) et formant, dans la position montée de la boîte à eau (50), une transition sensiblement lisse et à fleur entre la vitre (40) du véhicule et la boîte à eau (50), une ailette de support (80), qui porte ledit au moins un élément d'étanchéité (90), étant réalisée entre la première partie (20) et la deuxième partie (30) de l'élément profilé (10), l'évidement d'encliquetage (60) étant formé par une branche à ressort (62) et l'ailette de support (80), l'extrémité libre (64) de la branche à ressort (62) et l'ailette de support (80) délimitant une ouverture d'engagement (61) de l'évidement d'encliquetage (60), au moins un élément d'encliquetage (70) étant prévu, lequel est agencé à l'intérieur de l'évidement d'encliquetage (60) et lequel peut être amené en prise par force et/ou par conjugaison de forme avec l'ailette (51) de la boîte à eau (50), l'introduction de l'ailette (51) de la boîte à eau (50) dans l'évidement d'encliquetage (60) dans une première direction (R1) étant facilitée, alors que l'extraction de l'ailette (51) hors de l'évidement d'encliquetage (60) dans la direction opposée (R2) étant rendue difficile, **caractérisé en ce que** ledit au moins un élément d'encliquetage (70) est réalisé en forme d'ailette, s'étend dans la direction longitudinale de l'élément profilé (10) et est disposé en formant un angle aigu (alpha) avec la direction (R1, R2) et avec l'ailette (51) de la boîte à eau (50), **en ce que** ledit au moins un élément d'encliquetage (70) forme une barbelure et **en ce que** l'élément d'encliquetage (70) est constitué d'un matériau élastique souple, tandis que les parties (20, 30) de l'élément de profilé (10) et l'ailette de support (80) sont constituées d'un matériau plus dur mais encore élastique.

2. Élément profilé selon la revendication 1, **caractérisé en ce que** ledit au moins un élément d'encliquetage (70), sur son arête longitudinale (72) libre, est muni d'une arête bombée ou en forme de bec (71).

3. Élément profilé selon la revendication 2, **caractérisé en ce que** l'arête bombée ou en forme de bec (71) dudit au moins un élément d'encliquetage (70) prend appui sur l'ailette (51) de la boîte à eau (50) dans la position montée de cette dernière.

4. Élément profilé selon l'une quelconque des revendications 1 à 3, **caractérisé en ce que** ledit au moins un élément d'encliquetage (70) s'engage au moins par tronçons dans l'ouverture d'engagement (61).

5. Élément profilé selon l'une quelconque des revendications 1 à 5, **caractérisé en ce que** la branche à ressort (62) est réalisée sensiblement en forme de L, de U ou en forme de crochet.

6. Élément profilé selon l'une quelconque des revendications 1 à 5, **caractérisé en ce que** l'extrémité libre (64) de la branche à ressort (62) à l'intérieur de l'évidement d'encliquetage (60) est munie d'une contre-dépouille (63).

7. Élément profilé selon l'une quelconque des revendications 1 à 6, **caractérisé en ce que** l'ailette de support (80) forme une contre-dépouille (83) à l'intérieur de l'évidement d'encliquetage (60).

8. Élément profilé selon l'une quelconque des revendications 1 à 7, **caractérisé en ce que** ledit au moins un élément d'étanchéité (90) et/ou ledit au moins un élément d'encliquetage (70) sont reliés à l'ailette de support (80) par adhésion de matière.

9. Élément profilé selon l'une quelconque des revendications 1 à 8, **caractérisé en ce que** ledit au moins un élément d'étanchéité (90) est réalisés d'un seul tenant avec l'ailette de support (80).

10. Élément profilé selon l'une quelconque des revendications 1 à 9, **caractérisé en ce que** la première partie (20), la deuxième partie (30) et/ou l'ailette de support (80) sont munies, au moins par zones, d'un insert de renfort (26).

11. Élément profilé selon l'une quelconque des revendications 1 à 10, **caractérisé en ce que** la première partie (20), la deuxième partie (30) et/ou l'ailette de support (80) sont réalisées sous forme de profilé extrudé.

12. Système d'étanchéité pour la transition entre une vitre (40) de véhicule et une boîte à eau (50), en particulier pour la zone inférieure d'un pare-brise de véhicule automobile, comportant un élément profilé (10) selon l'une des revendications 1 à 11.
